# EUROPEAN PATENT APPLICATION

(11) **EP 1 772 508 A1**
(43) Date of publication of application: **11.04.2007**
(21) Application number: 05743174.4
(22) Date of filing: 26.05.2005
(51) Int. Cl.: C09K 11/56, C09K 11/08, H01J 31/12

(54) **DISPLAY UNIT-USE BLUE LIGHT EMITTING FLUORESCENT SUBSTANCE AND PRODUCTION METHOD THEREFOR AND FIELD EMISSION TYPE DISPLAY UNIT**

(30) Priority: 09.06.2004 JP 2004171008
(71) Applicant: Kabushi Kaisha Toshiba, Tokyo 105-8001 (JP)
(72) Inventor: YOKOSAWA, Nobuyuki, c/o Intellectual Property Div., Tokyo 1058001 (JP); YAMAGUCHI, Kenichi, c/o Intellectual Property Div., Tokyo 1058001 (JP); ONO, Yuuki, c/o Intellectual Property Division, Tokyo 1058001 (JP); ITO, Takeo, c/o Intellectual Property Division, Tokyo 1058001 (JP)
(74) Representative: HOFFMANN EITLE
(86) International application number: PCT/JP2005/009687
(87) International publication number: WO 2005/121275

(57) **Abstract**

A blue-emitting phosphor for a display of the present invention is a zinc phosphor which emits blue light when excited by an electron beam with an accelerating voltage of 15 kV or lower and which is made of a zinc sulfide phosphor of a hexagonal system with silver and aluminum as activators and with an average particle size of 1.0 to 4.0 µm. The blue-emitting phosphor can be manufactured by: continuously passing a phosphor material through a tubular heating furnace which is set inclined relative to a horizontal direction and rotates, to quickly heating and burning the phosphor material in the heating furnace; and continuously discharging and cooling a burned material. A field-emission display using the blue-emitting phosphor has improved display characteristics such as initial brightness (white brightness), color reproducibility, and the like and has a high withstand voltage characteristic.

## Description

### Technical Field

The present invention relates to a blue-emitting phosphor for a display, a method of manufacturing the same, and a field-emission display.

### Background Art

With the coming of a multimedia age, a larger screen, higher definition, compatibility to various sources such as computers are demanded in displays being core devices of digital networks.

Among displays, a field-emission display (FED) using electron emitters such as field-emission cold cathode devices have recently been under active research and development as a large-screen, thin digital device capable of displaying various kinds of information with high precision and high definition.

In the FED, whose basic display principle is the same as that of a cathode-ray tube (CRT), phosphors are excited by electron beams to emit light, but an acceleration voltage (excitation voltage) of the electron beams is 3 to 15 kV and thus is lower than that of the CRT and current density of the electron beams is high. Because of this, full research on phosphors for FED has not progressed under the present situation.

In the FED, since the acceleration voltage (excitation voltage) is 3 to 15 kV which is lower than that of the CRT and the electron beams with high current density is used for excitation, the phosphors are required to be resistant against the electron beams with high current density. To meet such requirement, it has been known that, when a blue-emitting zinc sulfide phosphor (Zn S: Ag, Al) has a crystal structure of a hexagonal system instead of a cubic system, brightness deterioration and the like due to the impact of the electron beams can be reduced and accordingly the life of the phosphor can be lengthened (for example, see Patent document 1).

Further, to improve a withstand voltage characteristic of the FED, it is desirable to improve flatness or smoothness of surfaces of phosphor layers (phosphor surfaces) as much as possible. To improve the smoothness of the phosphor surfaces, reducing a particle size of the used phosphors has been considered.

However, to obtain a zinc sulfide phosphor of a hexagonal system, burning at a higher temperature than that to obtain a zinc sulfide of a cubic system is required, and therefore, if the burning is performed for a predetermined time by a conventional method in order to obtain sufficient brightness, an average particle size becomes 5 µm or larger, which has posed a problem that a phosphor with a small particle size cannot be obtained.
Patent Document 1: Japanese Patent Laid-Open Applecation No. 2002-226847 (pages 2-3)

### Disclosure of the Invention

The present invention was made to solve such a problem, and an object thereof is to increase emission brightness, realize high color purity, and improve smoothness of a phosphor surface in a blue-emitting phosphor which is used in a field-emission display (FED) and the like and is excited by an electron beam with an accelerating voltage of 15 kV or lower and with high current density. It is another object to provide a FED which includes the above blue-emitting phosphor to realize high brightness, good display characteristic such as color reproducibility, and excellent withstand voltage characteristic.

A blue-emitting phosphor for a display of the present invention comprises a silver and aluminum activated zinc sulfide having a crystal structure of a hexagonal system (herein after, of the hexagonal system) and being excited by an electron beam whose acceleration voltage is 15 kV or lower to emit blue light, wherein the silver and aluminum activated zinc sulfide phosphor of the hexagonal system has an average particle size of 1.0 to 4.0 µm.

A method of manufacturing a blue-emitting phosphor for a display of the present invention comprises burning a phosphor material containing elements constituting a host material of the phosphor and an activator or compounds containing the elements by heating, wherein the burning includes continuously passing the phosphor material through a tubular heating furnace, which is set inclined relative to a horizontal direction and rotates, to burn the phosphor material by heating in the heating furnace; and cooling a burned material continuously discharged from the heating furnace.

A field-emission display of the present invention comprises a phosphor layer including a blue-emitting phosphor layer, a green-emitting phosphor layer, and a red-emitting phosphor layer, an electron emitting source which emits an electron beam with an accelerating voltage of 15 kV or lower to the phosphor layer to cause light emission of the phosphor layer, and an envelope which vacuum-seals the electron emitting source and the phosphor layer, wherein the blue-emitting phosphor layer includes the blue-emitting phosphor for a display described above.

Since the blue-emitting phosphor of the present invention is made of the silver and aluminum activated zinc sulfide phosphor of the hexagonal system with an average particle size of 1.0 to 4.0 µm, its emission brightness when excited by the electron beam with the accelerating voltage of 15 kV or lower is higher than emission brightness of a silver and aluminum activated zinc sulfide phosphor of a hexagonal system with a larger particle size. Further, the blue-emitting phosphor of the present invention is good in color purity and has a long life. According to this blue-emitting phosphor, since it is possible to obtain a phosphor surface with high smoothness and flatness, a withstand voltage characteristic of a thin, flat display such as a FED can be greatly improved.

Moreover, according to the manufacturing method of the present invention, the phosphor material is continuously passed through the tubular heating furnace which is set inclined relative to the horizontal direction and rotates around an axis, and is quickly heated while rolling in a process of moving in the heating furnace. Consequently, uniform heat energy is efficiently given to the phosphor material. As a result, it is possible to complete the burning in a shorter time compared with a conventional burning method using a crucible. Therefore, it is possible to obtain a zinc sulfide phosphor of a hexagonal system with a small particle size without any brightness deterioration.

### Brief Description of Drawings

[FIG. 1] FIG. 1 is a view schematically showing the structure of a burning apparatus used in an embodiment of the present invention.
[FIG. 2] FIG. 2 is a cross-sectional view schematically showing a FED as an embodiment of the present invention.

### Best Mode for Implementing the Invention

Next, preferred embodiments of the present invention will be described. It should be noted that the present invention is not limited to the following embodiments.

A blue-emitting phosphor according to a first embodiment of the present invention is a silver and aluminum activated zinc sulfide phosphor of a hexagonal system which is substantially expressed by a formula ZnS:Ag,Al and has an average particle size (d) of 1.0 to 4.0 µm, more preferably, 2.0 to 3.0 µm. This average particle size (d) is a value measured by a permeability method (concretely, a Blaine method).

The reason why the average particle size (d) of the silver and aluminum activated zinc sulfide phosphor is limited to 1.0 µm or larger is that it is difficult to industrially manufacture a phosphor having an average particle size of less than 1.0 µm and having sufficient brightness. Further, a phosphor with the average particle size (d) of more than 4.0 µm is not preferable since it does not exhibit an effect of improving emission brightness.

Further, in the silver and aluminum activated zinc sulfide phosphor (ZnS:Ag, Al) of this embodiment, amoleratio (S/Zn) of sulfur atoms and zinc atoms measured by X-ray photoelectron spectroscopy (XPS) is more than 0.97 and not more than 1.0.

The XPS is a method to examine the state (for example, the composition of elements) of a solid surface by measuring kinetic energy of electrons that escape from the surface when the surface is irradiated with monochromatic light (X-rays). Therefore, in the blue-emitting phosphor of the first embodiment, the aforesaid mole ratio indicates that the S/Zn mole ratio in a surface of ZnS:Ag,Al phosphor particles is more than 0. 97. Incidentally, a conventional ZnS:Ag, Al phosphor of a hexagonal system has an average particle size d of more than 4.0 µm (for example, 5 µm or larger). In such a conventional hexagonal ZnS:Ag,Al phosphor, an S/Zn value measured by the XPS is 0.97 at the maximum, which greatly deviates from a stoichiometric mole ratio, namely, 1.

The blue-emitting phosphor of this embodiment as described above is suitable as a phosphor excited by electron beams with the accelerating voltage of 15 kV or lower. Concretely, it is suitable as a blue-emitting phosphor of a high-voltage FED whose exciting voltage is 5 kV to 15 kV and a blue-emitting phosphor of a low-voltage FED whose exciting voltage is lower than 5 kV.

In the silver and aluminum activated zinc sulfide phosphor (ZnS:Ag,Al) of the hexagonal system, Ag is a first activator (main activator) forming a luminescent center, and a preferable content of Ag for 1 g zinc sulfide which is a phosphor host is within a range from 1 × 10⁻⁵ to 1 × 10⁻³ g. When the content of the first activator Ag for 1 g zinc sulfide is less than 1 × 10⁻⁵ and when it is more than 1 × 10⁻³, emission brightness and emission chromaticity deteriorate. The Ag content for 1 g zinc sulfide is preferably within a range from 3 × 10⁻⁵ to 8 × 10⁻⁴, more preferably, from 5 × 10⁻⁵ to 5 × 10⁻⁴ g.

Al is a second activator (coactivator) directly excited by the electron beams, and the excitation energy of such a second activator causes the first activator to emit light, whereby it is possible to increase emission brightness of the zinc sulfide phosphor (ZnS: Ag phosphor). The content of the second activator Al for 1 g zing sulfide which is the phosphor host is preferably within a range from 1 × 10⁻⁵ to 5 × 10⁻³ g. When the Al content for 1 g zinc sulfide is less than 1 × 10⁻⁵ g and when it is more than 5 × 10⁻³ g, emission brightness lowers and emission chromaticity also deteriorates. The Al content for 1 g zinc sulfide is preferably within a range from 3 × 10⁻⁵ to 3 × 10⁻³ g, more preferably, from 5 × 10⁻⁵ to 1 × 10⁻³ g.

The zinc sulfide phosphor having the crystal structure of the hexagonal system is excellent in deterioration resistance, and therefore, it suffers less brightness deterioration and the like with time due to impact of electron beam irradiation even when repeatedly irradiated with electron beams with high current density. To obtain the effect of reducing the brightness deterioration due to the electron beam impact, a ratio of hexagonal crystals in the crystal structure of the zinc sulfide is preferably 50% or more. A less than 50% ratio of the hexagonal crystals cannot produce good resistance against the electron beam impact. The ratio of the hexagonal crystals in the crystal structure is preferably 80% or more, more preferably, 95% or more, and it is especially desirable that substantially the whole crystal structure is of the hexagonal system.

The silver and aluminum activated zinc sulfide phosphor of the hexagonal system with the average particle size (d) of 1.0 to 4.0 µm, which is the first embodiment of the present invention, is manufactured by the following method.

First, predetermined amounts of activator materials are added to a zinc sulfide material which is a phosphor host, flux such as potassium chloride or magnesium chloride is further added as required, and they are mixed by wet mixing. Concretely, the a zinc sulfide material is dispersed in ion-exchange water to be turned into slurry form, arbitrary amounts of the activator materials and the flux are added therein, and they are stirred and mixed by a stirrer. The mixing time is set long enough for the activators to be sufficiently dispersed. Next, the slurry containing the zinc sulfide material, the activators, and so on is transferred to a drying container and is dried by a drier, and the dried slurry is used as the phosphor material.

Next, the obtained phosphor material is burned by heating. In the burning process, the phosphor material is continuously passed through a rotating tubular heating furnace which is set inclined relative to a horizontal direction. Then, the phosphor material is quickly heated up to a predetermined burning temperature in the heating furnace, and is moved from an upper side to a lower side in the heating furnace while rolling with the rotation of the heating furnace. In this manner, the phosphor material is heated for a necessary and sufficient time to be burned. Thereafter, the burned material is continuously discharged from the heating furnace and the discharged burned material is quickly cooled.

In the manufacturing method of the embodiment as described above, the inside of the tubular heating furnace and a part where the burned material discharged from the heating furnace is cooled are preferably kept in an oxygen-free state in which oxygen is eliminated. It is especially desirable that the inside of the heating furnace is kept in an atmosphere of inert gas such as argon or nitrogen, a reducing gas atmosphere containing hydrogen, or further, a hydrogen sulfide atmosphere.

It is desirable to heat and burn the phosphor material in the oxygen-free atmosphere and to quickly cool the burned material while the oxygen-free atmosphere is maintained. Further, a rotation speed of the heating furnace is preferably 0.5 to 50 rpm. The rotation speed exceeding 50 rpm makes it difficult to control the necessary burning time and thus is not desirable.

Further, it is desirable to adjust an inclination angle of the heating furnace relative to the horizontal direction according to the length, the rotation speed, and the like of the heating furnace so that the phosphor material can be stayed in the furnace for a time long enough to be burned.

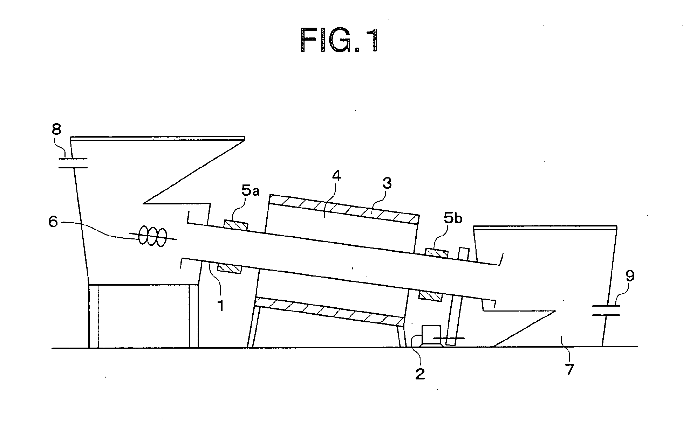

In the burning process as described above, for example, the burning apparatus shown in FIG. 1 can be used. In FIG. 1, the reference numeral 1 denotes a tubular heat-proof container made of quartz, alumina, or the like. This heat-proof container 1 is set inclined relative to the horizontal direction, and is continuously rotated around a center axis by a rotating mechanism 2 such as a motor. An inclination angle of the heat-proof container 1 relative to the horizontal direction is adjustable according to the length and rotation speed of a later-described heating part so that the phosphor material is stayed in the heating part for a time long enough to be burned.

A heat generator 3 such as molybdenum silicide is provided along most length of an outer periphery of the heat-proof container 1 to form the heating part 4. An upper portion and a lower portion, of the heat-proof container 1, on whose periphery the heat generator 3 is not disposed, are cooling parts 5a, 5b. The cooling relies mainly on water cooling.

In an upper end portion of the heat-proof container 1, a feeding mechanism (feeder) 6 continuously feeding the phosphor material which is to be heated and burned is provided, and in a lower end portion of the heat-proof container 1 constituting the cooling part 5b, a burned material collector 7 continuously receiving the burned material is provided.

Further, to make the whole inside of the apparatus oxygen-free, gas such as inert gas is supplied from a gas inlet port 8 attached to the feeding mechanism 6 to flow in the heat-proof container 1 with the burned material. Then, this gas is discharged from a gas outlet port 9 attached to the burned material collector 7. At this time, the burned material is completely cooled in the cooling part 5b.

According to the embodiment as described above, the phosphor material is continuously passed through the tubular heating furnace which is set inclined relative to the horizontal direction and rotates around the axis, and is quickly heated while rolling, in the process of moving the heating furnace. Consequently, the uniform heat energy is given to the phosphor material in the oxygen-free state and in the inert gas or reducing gas atmosphere or the hydrogen sulfide atmosphere. As a result, it is possible to complete the burning in a shorter time than a conventional burning method using a crucible. Therefore, it is possible to obtain a zinc sulfide phosphor of a hexagonal system with a small particle size (for example, the average particle size (d) is 1.0 to 4.0 µm) without any brightness deterioration.

Further, since the aggregation of phosphor particles can be reduced, no further pulverization after the burning is required. Therefore, since deterioration of the phosphor due to the repeated pulverization process can be prevented, a process such as re-annealing need not be added, which enables reduction in the number of processes. Further, since the phosphor material is heated and burned while rolling in the heating furnace, it is possible to obtain substantially spherical phosphor particles uniform in particle size.

Since the silver and aluminum activated zinc sulfide phosphor of the hexagonal system manufactured by the embodiment described above has a smaller diameter with the average particle size being 1.0 to 4.0 µm, it has high emission brightness and has good color purity when excited by the electron beams with the accelerating voltage of 15 kV or lower. Further, the phosphor is excellent in resistance against the electron beams with high current density and has improved life. Moreover, since the average particle size of the phosphor is made smaller with the average particle size being 4.0 µm or less, the light-emitting layer including the phosphor can have high density (can be densified) and thus can have a phosphor surface with improved smoothness. Therefore, the withstand voltage characteristic of a display is greatly improved.

To form the phosphor layer by using the blue-emitting phosphor of the embodiment of the present invention, a known slurry method or printing method can be used. In the slurry method, powder of the blue-emitting phosphor is mixed with pure water, polyvinyl alcohol, a photosensitive material such as ammonium dichromate, a surfactant, and so on to prepare a phosphor slurry, and after applied by a spin coater or the like and dried, this slurry is exposed to a predetermined pattern by ultraviolet and is developed, and an obtained phosphor pattern is dried, whereby the blue-emitting phosphor layer can be formed.

Next, a field-emission display (FED) in which each blue phosphor layer includes the blue-emitting phosphor of the embodiment of the present invention will be described.

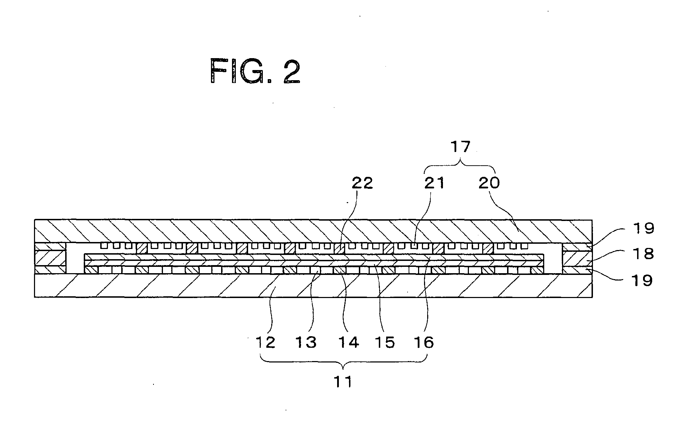

Fig. 2 is a cross-sectional view showing the structure of one embodiment of the FED. In FIG. 2, the reference numeral 1 denotes a faceplate, which has phosphor layers 13 formed on a transparent substrate such as a glass substrate 12. Each of the phosphor layers 13 has a blue-emitting phosphor layer, a green-emitting phosphor layer, and a red-emitting phosphor layer which are formed for each pixel, and these phosphor layers are separated by light absorbing layers 14 each made of a black conductive material. Of the phosphor layers of the respective colors forming the phosphor layers 13, each of the blue-emitting phosphor layers includes the blue-emitting phosphor of the above-described embodiment.

Each of the blue-emitting phosphor layers desirably has a thickness of 1 to 12 µm, more preferably, 3 to 9 µm. The reason why the thickness of the blue-emitting phosphor layer is limited to 1 µm or more is that it is difficult to form a phosphor layer which has a thickness of less than 1 µm and in which phosphor particles are uniformly arranged. Further, a blue-emitting phosphor layer with a thickness of over 12 µm has lower emission brightness and thus cannot be applied to practical use.

The green-emitting phosphor layer and the red-emitting phosphor layer can be made of various kinds of known phosphors. The green-emitting phosphor layers and the red-emitting phosphor layers are desirably equal in thickness to the blue-emitting phosphor layers in order to prevent a level difference among the phosphor layers of the respective colors.

The aforesaid blue-emitting phosphor layer, green-emitting phosphor layer, red-emitting phosphor layer, and light absorbing layers 14 separating these layers are alternately and repeatedly arranged in a horizontal direction, and a portion where the phosphor layers 13 and the light absorbing layers 14 exist is an image display area. As an arrangement pattern of the phosphor layers 13 and the light absorbing layers 14, any of various pattern such as a dotted pattern, a striped pattern, and so on is applicable.

Further, a metal back layer 15 is formed on the phosphor layers 13. The metal back layer 15 is made of a metal film such as an Al film and reflects light traveling in a direction of a later-described rear plate among lights emitted in the phosphor layers 13, thereby improving brightness. The metal back layer 15 also has a function of giving conductivity to the image display area of the faceplate 11 to prevent the accumulation of charge, and serves as an anode electrode for electron beams of the rear plate. The metal back layer 15 further has a function of preventing the phosphor layers 13 from being damaged by ions which are generated when residual gas in the faceplate 11 and the vacuum container (envelope) is ionized by the electron beams.

On the metal back layer 15, a getter film 16 formed of an evaporation getter material made of Ba or the like is formed. This getter film 16 efficiently adsorbs gas which is generated when the display is in use.

The faceplate 11 and the rear plate 17 as described above are disposed to face each other and a space therebetween is airtightly sealed with a support frame 18. The support frame 18 is joined to the faceplate 11 and the rear plate 17 by joining members 19 made of frit glass, In, an alloy thereof, or the like, and these faceplate 11, rear plate 17, and support frame 18 form the vacuum container as the envelope.

The rear plate 17 includes a substrate 20 made of an insulative substrate such as a glass substrate or a ceramic substrate, or of a Si substrate; and a large number of electron emitters 21 formed on the substrate 20. Each of these electron emitters 21 includes, for example, a field-emission cold cathode, a surf ace-conduction electron emitter, and so on, and not-shown wirings are provided on a surface of the rear plate 17 on which the electron emitters 21 are formed. Specifically, a large number of the electron emitters 21 are formed in matrix, each corresponding to the phosphors of each pixel, and the intersecting wirings (X-Y wirings) are provided, each driving each row of the electron emitters 21 arranged in matrix. Incidentally, on the support frame 18, signal input terminals and row selection terminals which are not shown are provided. These terminals correspond to the aforesaid intersecting wirings (X-Y wirings) of the rear plate 17. Further, a flat FED, if made large, is likely to bend due to its thin plate shape. To prevent such bending and give strength against the atmosphere, reinforcing members (spacers) 22 may be disposed between the faceplate 11 and the rear plate 17 as required.

Since this FED has the blue-emitting phosphor of the aforesaid embodiment as that of the blue-emitting phosphor layers which emit light when irradiated with the electron beams, the FED has improved display characteristics such as initial brightness (white brightness) and color reproducibility, and has a high with stand voltage characteristic.

### Examples

Next, specific examples of the present invention will be described.

### Example 1

Predetermined amounts of activator materials (silver nitrate or the like as Ag and aluminum nitrate or the like as Al) were added to a ZnS material being a phosphor host, flux such as potassium chloride or magnesium chloride was further added as required, and they were mixed by wet mixing. The obtained slurry was transferred to a drying container to be dried by a drier, and the dried slurry was used as a phosphor material.

Next, this phosphor material together with appropriate amounts of sulfur and activated carbon was put in the heat-proof container of the burning apparatus shown in FIG. 1. Incidentally, the heat-proof container was made of quartz or alumina, with a 60 mm inside diameter and a 1000 mm length. The rotation speed thereof was set to 0.5 to 10 rpm and an inclination angle was set to 1 to 5°. Then, the put phosphor material was continuously passed in the heating part which was kept oxygen free and kept in an inert gas or reducing gas atmosphere (atmosphere with 3 to 5% hydrogen and with the rest being nitrogen), for 15 to 45 minutes, and was heated up to 980 to 1230°C to be burned, and thereafter, the burned material was quickly cooled in the cooling part.

Next, the obtained burned material was washed with ion exchange water or the like and then dried, and thereafter, screening or the like for removing coarse particles was conducted when necessary, whereby a zinc sulfide phosphor (ZnS: Ag, Al) of a hexagonal system was obtained. Then, an average particle size d of the obtained zinc sulfide phosphor measured by a permeability method and a mole ratio (S/Zn) of sulfur atoms and zinc atoms was measured by XPS.

Next, by using the obtained phosphor, a phosphor layer was formed by a slurry method. To form the phosphor layer, the phosphor was dispersed in a water solution containing polyvinyl alcohol and so on to be turned into slurry, and this slurry was applied on a glass substrate by a spin coater. The rotation speed of the spin coater and the viscosity of the slurry were adjusted, whereby the phosphor layer had a thickness of 3 × 10⁻³ mg/mm³.

Emission brightness and emission chromaticity of the phosphor layer thus formed were examined. To measure the emission brightness, the phosphor layer was irradiated with electron beams with an accelerating voltage of 10 kV and a current density of 2 × 10⁻⁵ A/mm². The emission brightness of the phosphor layer at this time was found as a value relative to emission brightness of a later-described comparative example which was defined as 100%.

Further, the emission chromaticity was measured by using SR-3 manufactured by Topcon as a chromaticity measurement apparatus. The measurement of the emission chromaticity was conducted in a dark room in which chromaticity at the time of the light emission was free from an external influence. Measurement results of the emission brightness and the emission chromaticity are shown in Table 1 together with the average particle size d and the S/Zn value previously obtained.

### Comparative Example

The same kind of phosphor material as that of the example 1 was filled in a quartz crucible together with appropriate amounts of sulfur and activated carbon, and was heated by the temperature of 1050 to 1230°C in a hydrogen sulfide atmosphere or a reducing atmosphere (atmosphere with 3 to 5% hydrogen and the rest being nitrogen) for 30 to 360 minutes to be burned. After the burning, the crucible was left at room temperature to be naturally cooled in a nitrogen atmosphere.

Next, the obtained burned material was washed with ion exchange water or the like to be dried, and thereafter screening or the like for removing coarse particles was conducted as required, whereby a zinc sulfide phosphor of a hexagonal system was obtained. An average particle size (d) and a S/Zn value of the zinc sulfide phosphor of the hexagonal system thus obtained were measured in the same manner as in Example 1.

Next, by using the obtained phosphor, a phosphor layer was formed by a slurry method, and emission brightness and emission chromaticity of this phosphor layer were examined in the same manner as in Example 1. The emission brightness of the phosphor layer at this time was defined as 100%. Measurement results of the emission brightness and the emission chromaticity are shown in Table 1 together with the average particle size d and the S/Zn value.

### Examples 2 to 6

The same kind of phosphor material as that of Example 1 was put in the heat-proof container of the burning apparatus together with appropriate amounts of sulfur and activated carbon, and was heated and burned in the same manner as in the example 1 while the heat-proof container was rotated, and thereafter, the burned material was quickly cooled in the cooling part. At this time, an average particle size (d) was adjusted by changing heating conditions (heating temperature, passage time), and so on, whereby zinc sulfide phosphors of a hexagonal system having average particle sizes d shown in Table 1 were produced. The average particle sizes (d) and S/Zn values of the obtained zinc sulfide phosphors of the hexagonal systemwere measured in the similar manner as in Example 1.

Next, by using these phosphors, phosphor layers were formed on glass substrates by a slurry method, and emission brightness and emission chromaticity of the phosphor layers were examined in the same manner as in Example 1. These measurement results as well as the average particle sizes d and the S/Zn values are shown in Table 1.

**[Table 1]**

| | Examples | | | | | | CE |
|---|---|---|---|---|---|---|---|
| | 1 | 2 | 3 | 4 | 5 | 6 | |
| Average Particle Size d(µm) | 3.5 | 3.0 | 2.5 | 2.5 | 2.7 | 3.3 | 5.5 |
| Mole Ratio (S/Zn) | 1.0 | 1.0 | 1.0 | 1.0 | 1.0 | 1.0 | 0.97 |
| Emission Brightness (%) | 102 | 105 | 110 | 101 | 107 | 101 | 100 |
| Emission Chromaticity (x,y) | 0.160, 0.035 | 0.160, 0.037 | 0.160, 0.040 | 0.160, 0.035 | 0.160, 0.038 | 0.160, 0.033 | 0.160, 0.035 |

| | | | | | | | |
|---|---|---|---|---|---|---|---|
| CE= Comparative Example | | | | | | | |

As is apparent from Table 1, each of the zinc sulfide phosphors of the hexagonal system obtained in Examples 1 to 6 is high in emission brightness and has good emission chromaticity when irradiated with the electron beams with the low accelerating voltage (15 kV or lower) and the high current density. On the other hand, the zinc sulfide phosphor of the hexagonal system of Comparative Example is inferior in emission brightness compared with Examples 1 to 6.

### Example 7

By using the zinc sulfide phosphor of the hexagonal system obtained in the example 1 as a blue-emitting phosphor, and by using a green-emitting phosphor (ZnS: Cu,Ag phosphor) and a red-emitting phosphor (Y₂O₂S: Eu phosphor), phosphor layers were formed on a glass substrate to constitute a faceplate. This faceplate and a rear plate having a large number of electron emitters were assembled together via a support frame, and a gap therebetween was airtightly sealed while being vacuum-exhausted. It was confirmed that a FED thus obtained was excellent in color reproducibility and exhibits a good display characteristic even after driven for 1000 hours in rated operation.

### Industrial Applicability

According to the blue-emitting phosphor of the present invention, it is possible to realize blue light emission with high brightness, good color purity, and long life when this phosphor is irradiated with electron beams with a low voltage and a high current density. Moreover, it is possible to greatly improve a withstand voltage characteristic of a thin, flat display such as a FED. Furthermore, according to the manufacturing method of the present invention, it is possible to manufacture a zinc sulfide phosphor of a hexagonal system with a small particle size without any brightness deterioration, and it is possible to efficiently obtain the blue-emitting phosphor of the present invention.

## Claims

1. A blue-emitting phosphor for a display, comprising a silver and aluminum activated zinc sulfide having a crystal structure of a hexagonal system (herein after, "having a crystal structure of a hexagonal system" is referred to as "of the hexagonal system") and being excited by an electron beam whose acceleration voltage is 15 kV or lower to emit blue light,
wherein the silver and aluminum activated zinc sulfide phosphor of the hexagonal system has an average particle size of 1.0 to 4.0 µm.

2. The blue-emitting phosphor for a display as set forth in claim 1,
wherein, in the silver and aluminum activated zinc sulfide phosphor of the hexagonal system, a mol ratio (S/Zn) of sulfur atoms and zinc atoms measured by X-ray photoelectron spectroscopy (XPS) is more than 0.97 and not more than 1.0.

3. A method of manufacturing the blue-emitting phosphor for a display as set forth in claim 1 or claim 2, comprising:
burning a phosphor material containing elements constituting a host material of the phosphor and an activator or compounds containing the elements by heating,
Wherein the burning includes continuously passing the phosphor material through a tubular heating furnace, which is set inclined relative to a horizontal direction and rotates, to burn the phosphor material by heating in the heating furnace; and cooling a burned material continuously discharged from the heating furnace.

4. The method of manufacturing the blue-emitting phosphor for a display as set forth in claim 3,
wherein an inside of the heating furnace is kept to be oxygen-free.

5. The method of manufacturing the blue-emitting phosphor as set forth in claim 3 or 4,
wherein the inside of the heating furnace is kept to be in an inert gas atmosphere or a reducing gas atmosphere.

6. The method of manufacturing the blue-emitting phosphor for a display according to any one of claims 3 to 5,
wherein an inclination angle of the heating furnace is adjusted so that the phosphor material is stayed in the heating furnace for a time long enough to be burned while moving in the heating furnace.

7. A field-emission display comprising:
a phosphor layer including a blue-emitting phosphor layer, a green-emitting phosphor layer, and a red-emitting phosphor layer;
an electron emitting source which emits an electron beam with an accelerating voltage of 15 kV or lower to the phosphor layer to cause light emission of the phosphor layer; and
an envelope which vacuum-seals the electron emitting source and the phosphor layer,
wherein the blue-emitting phosphor layer includes the blue-emitting phosphor as set forth in claim 1 or 2.
